Europäisches Patentamt

European Patent Office

Office européen des brevets

(11) Veröffentlichungsnummer: **0 519 492 A2**

## EUROPÄISCHE PATENTANMELDUNG

(21) Anmeldenummer: **92110363.6**

(51) Int. Cl.5: **C04B 35/58**

(22) Anmeldetag: **19.06.92**

(30) Priorität: **20.06.91 DE 4120423**

(43) Veröffentlichungstag der Anmeldung:
**23.12.92 Patentblatt 92/52**

(84) Benannte Vertragsstaaten:
**AT DE GB**

(71) Anmelder: **Elektroschmelzwerk Kempten GmbH**
**Hanns-Seidel-Platz 4**
**W-8000 München 83(DE)**

(72) Erfinder: **Sigl, Lorenz, Dr.**
**Oberried 5**
**A-6600 Breitenwang(AT)**
Erfinder: **Thaler, Hubert**
**Duracher Strasse 38**
**W-8960 Kempten(DE)**

(54) **Reaktionsgesinterte bornitridhaltige Verbundwerkstoffe und Formkörper sowie Verfahren zu ihrer Herstellung.**

(57) Die Erfindung betrifft ein Verfahren zur Herstellung von Bornitrid-haltigen Formkörpern aus für den Schlickerguß geeigneten Substanzen mittels Schlickerguß, Reaktionssintern und Nachglühen sowie entsprechend herstellbare Formkörper. Besonders geeignet ist das Verfahren zur Herstellung von Formkörpern aus keramischen Verbundwerkstoffen, bestehend aus 5 bis 60 Vol.- % Bornitrid und 40 bis 95 Vol.- % $Si_{6-x}Al_xO_xN_{8-x}$ $(0<X\leq4)$ oder 40 bis 95 Vol.- % $Si_2N_2O$.

EP 0 519 492 A2

Die Erfindung betrifft ein Verfahren zur Herstellung von reaktionsgesinterten Bornitrid-haltigen Verbundwerkstoffen und von Formkörpern aus diesen Verbundwerkstoffen sowie nach dem Verfahren herstellbare Bornitrid-haltige Verbundwerkstoffe.

Bornitrid-haltige Verbundwerkstoffe zeichnen sich durch eine Kombination wertvoller Eigenschaften aus, wie z.B. gute Thermoschockbeständigkeit, niedrige Wärmeleitfähigkeit, gute mechanische Bearbeitbarkeit, gute Korrosionsbeständigkeit gegenüber Metall- bzw. Glasschmelzen und geringe Benetzbarkeit durch Schmelzen.

Aufgrund der erwünschten vorteilhaften Eigenschaften werden solche Werkstoffe beispielsweise als Ablöseringe beim Stranggießen von Stahl oder als Thermoelementschutzrohr in aggressiven Schmelzen verwendet.

So beschreibt die DE-C-3534824 (entspricht US-A-4640336) einen feuerfesten Werkstoff für das Stranggießen, welcher aus 1 bis 80 Gew.-% Aluminiumnitrid (AlN), 1 bis 50 Gew.-% Bornitrid (BN), 1 bis 30 Gew.-% Tonmineral und Siliciumnitrid ($Si_3N_4$) als Rest besteht. Dieser Werkstoff kann zusätzlich noch Aluminiumoxid ($Al_2O_3$) enthalten. Auch weitere feuerfeste Werkstoffe sowie deren Eigenschaften und Nachteile werden in DE-C-3534824 beschrieben.

Formkörper aus diesem Verbundwerkstoff werden nach DE-C-3534824 dadurch erhalten, daß $Si_3N_4$, AlN, $Al_2O_3$, Bornitrid, und Bentonit vermischt werden, ein organisches Lösungsmittel eingemischt wird, und die Mischung mit einer hydraulischen Presse zu einem Ring oder Stab verpreßt wird. Der Ring oder Stab wird anschließend 5 Stunden in einer Stickstoffatmosphäre bei 1700°C gesintert.

Wegen der Verwendung von natürlichen Tonmineralien, in denen Flußmittel wie Alkalien bzw. Erdalkalien enthalten sind, kommt es beim Sintern zur Bildung von Glas. Dies führt dazu, daß der Werkstoff bei erhöhten Anwendungstemperaturen erweichen kann. Das in DE-C-3534824 beschriebene Herstellungsverfahren ist zudem energieintensiv und teuer. Dies gilt um so mehr, wenn die hergestellten Teile große Durchmesser haben sollen.

Die Herstellung Bornitrid-haltiger Formkörper aus 60 bis 97 Gew.-% $Si_3N_4$ und 3 bis 40 Gew.-% Bornitrid wird in DE-A-3106675 (entspricht US-A-4412008) beschrieben. Der Sinterkörper wird dadurch erhalten, daß Siliciumpulver (47,3 - 95,1 Gew.-%) und Bornitrid-Pulver (4,9 - 52,7 Gew.-%) mit einer Lösung eines Dispersionsmittels und eines Bindemittels in einem organischen Lösungsmittel geknetet werden und das erhaltene Knetgemisch zur Formung eines Rohpreßlings einer Preßformung unterworfen wird. Anschließend wird der Rohpreßling in nichtoxidierender Atmosphäre bei 1100 bis 1300°C getrocknet und bis zu einer Härte, die eine weitere Bearbeitung noch zuläßt gesintert. Dann wird der Sinterkörper auf die vorgeschriebenen Maße maschinell bearbeitet und nitridiert.

Durch dieses Verfahren sind wegen der Verwendung organischer Lösungsmittel nur C-haltige Formkörper erhältlich. Diese sind für bestimmte Anwendungszwecke wie beispielsweise Ablöseringe zum Gießen von höherlegiertem Stahl ungeeignet. Zudem ist das beschriebene Herstellungsverfahren energie-und zeitaufwendig und damit teuer.

Nach dem Stand der Technik wird bei allen Herstellungsverfahren für Bornitrid-haltige Sinterkörper eine Ausgangsmischung aus Bornitrid und verschiedenen anderen Stoffen gemischt, gepreßt und gesintert oder reaktionsgesintert. Durch die Verwendung Bornitrid-haltiger Ausgangspulver bei der Herstellung Bornitrid-haltiger Formkörper läßt sich der Schlickerguß nicht für die Formung solcher Formkörper nutzen. Bisher wurden Bornitrid-haltige Formkörper daher durch Schlickerguß nicht hergestellt, da Bornitrid-haltige Schlikker wegen der mangelhaften Benetzbarkeit von Bornitrid durch Wasser nicht verarbeitbar sind. Bornitrid wirkt wegen seiner mangelhaften Benetzbarkeit als Trennmittel und führt zu einem Grünkörper mit geringer Festigkeit. Auch die konventionelle Formgebung Bornitrid-haltiger Pulver über Preßverfahren ist schwierig und weist auf die generell problematische Verarbeitbarkeit von Bornitrid hin. Selbst wenn man versuchen sollte Bornitrid im Schlickerguß zu verwenden, müßten organische Bindemittel zugesetzt werden. Die Verwendung organischer Bindemittel für den Schlickerguß führt zu C-haltigen Grünkörpern. Solche Formkörper weisen nach dem Nitridieren schlechte Nitridierungsgrade auf. Zudem sind solche Formkörper, wie schon erwähnt, für bestimmte Anwendungen ungeeignet.

Auch für $\beta'$ SiAlON enthaltende Formkörper wird der Schlickerguß bisher nicht verwendet, da das für die $\beta'$ SiAlON Bildung eingesetzte AlN in wasserhaltigen Schlickern unter Bildung von $NH_3$ reagiert. Das Verfahren ist damit nur in sehr engen Grenzen kontrollierbar und für den industriellen Einsatz nicht geeignet.

Es stellt sich somit die Aufgabe, Verbundwerkstoffe auf Basis von Bornitrid sowie Formkörper aus Verbundwerkstoffen auf Basis von Bornitrid vorzusehen, welche die gewünschten vorteilhaften Eigenschaften besitzen sowie einfache und/oder preisgünstige Verfahren zur Herstellung von Formkörpern enthaltend Bornitrid zur Verfügung zu stellen.

Die Aufgabe wird erfindungsgemäß durch keramische Verbundwerkstoffe bestehend aus 5 bis 60 Vol.-

% Bornitrid und 40 bis 95 Vol.-% $\beta'$ SiAlON oder 40 bis 95 Vol.- % $Si_2N_2O$ gelöst. Diese sind dadurch herstellbar, daß ein Gemisch ausgewählter Ausgangssubstanzen, welche für den Schlickerguß geeignet sind, über Schlickerguß in eine endkonturnahe Form gebracht werden, über einen Nitridierungsschritt Bornitrid und $Si_3N_4$ in diesem endkonturnahen Formkörper gebildet wird sowie durch eine Glühbehandlung die Bildung geeigneter Mischkristalle in diesem Formkörper erreicht wird.

Die Erfindung betrifft somit weiterhin ein Verfahren zur Herstellung Bornitrid-haltiger Formkörper, bei dem das Bornitrid während des Herstellungsverfahrens gebildet wird.

Unter $\beta'$ SiAlON im Sinne der Erfindung sind feste Lösungen von $Si_3N_4$, AlN, $Al_2O_3$ und $SiO_2$ zu verstehen, wobei Al und O in äquimolaren Anteilen entsprechend der Formel $Si_{6-x}Al_xO_xN_{8-x}$ (0< x ≦4) vorhanden sind.

Die im Stand der Technik dargelegten Probleme bei der Verwendung des Schlickergusses zur Herstellung Bornitrid-haltiger Formkörper werden im erfindungsgemäßen Verfahren durch die Auswahl der Ausgangssubstanzen vermieden. Als Ausgangssubstanzen sind insbesondere folgende Materialien geeignet: Si-Pulver und

Al- oder Si- oder Ca-Boride oder Gemenge dieser Verbindungen und

$Al_2O_3$ wenn $\beta'$ SiAlON-haltige Bornitrid-Formkörper gebildet werden, oder $SiO_2$ zur Bildung von $Si_2N_2O$-haltigen Bornitrid-Formkörpern.

Es lassen sich bevorzugt handelsübliche Si-Pulver bis 15 $\mu$m Korngröße einsetzen.

Die verwendeten Boride sollten bevorzugt eine Korngröße unter 50 $\mu$m besonders bevorzugt unter 10 $\mu$m haben. Der Kohlenstoffgehalt der Boride sollte bevorzugt unter 0,1 % liegen. Der B-Gehalt der verwendeten Boride ist unkritisch. Er kann auf den im Formkörper gewünschten Bornitrid-Gehalt umgerechnet werden. Das verwendete Borid wird dann entsprechend eingewogen. Geeignete Boride sind beispielsweise handelsübliche $AlB_{12}$, $AlB_2$, $SiB_6$, $SiB_4$, $CaB_6$ sowie Gemenge dieser Verbindungen. Der Oxid-Gehalt der verwendeten Boride läßt sich mit dem gewünschten Oxidgehalt des fertigen Formkörpers verrechnen. Er ist somit auch unkritisch.

$Al_2O_3$ kann in Form handelsüblicher niedercalzinierter Tonerde bevorzugt mit einer Körnung < 50 $\mu$m eingesetzt werden. $Al_2O_3$ kann durch $Al(OH)_3$ ersetzt werden.

$SiO_2$ wird z.B. als handelsüblicher Quarz mit einer Körnung < 10 $\mu$m verwendet.

Zur besseren Nitridierung von Si kann z.B. $Fe_2O_3$ handelsüblicher Qualität in Gehalten bis zu 3 % zugegeben werden. Damit sind Fe-Verunreinigungen im Ausgangspulver tolerierbar. Sie können mit der Nitridierhilfe ($Fe_2O_3$) verrechnet werden. Für die Herstellung von Bornitrid-haltigen Formkörpern nach dem beschriebenen Verfahren ist somit die Verwendung hochreiner Ausgangssubstanzen nicht nötig. Verunreinigungen wie Siliciumoxid lassen sich auf den im fertigen Formkörper erwünschten Oxidgehalt anrechnen. Die Einwaage der entsprechenden sauerstoffhaltigen Ausgangspulver (z.B.$Al_2O_3$) wird dann entsprechend reduziert.

AlN und Bornitrid sollten als Ausgangspulver in dem erfindungsgemäßen Verfahren nicht eingesetzt werden, da ihre Verarbeitung im Schlickerguß wegen der genannten Nachteile problematisch ist. Auch $B_2O_3$ sollte in den Ausgangspulvermischungen nicht vorhanden sein.

Den Ausgangspulvern können weiteres Aluminiumoxid, weiteres Siliciumdioxid, Mullit, Zirconoxid, Yttriumoxid, YAG ($3Y_2O_3 \cdot 5Al_2O_3$), Calciumoxid und Magnesiumoxid in Mengen bis zu 50 Vol.-% der Hartstoffphase zugesetzt werden. Diese Oxidzusätze reagieren weder beim Schlickerguß noch im Nitridierungsschritt, noch in der Glühbehandlung mit den übrigen Ausgangspulvern. Sie ändern die Eigenschaften der Formkörper in jeweils erwünschter Weise.

Die nach obigen Angaben erhältlichen Pulvermischungen werden nach den für den Schlickerguß üblichen Verfahren, wie sie beispielsweise in Salmang Scholze (5. Auflage, Springer Verlag, 1968, S. 247 ff) beschrieben sind, in eine endkonturnahe Form gebracht.

Anschließend wird der erhaltene Formkörper bei 1000ºC bis 1410ºC, bevorzugt 1200ºC bis 1400ºC für 5 bis 100 h, bevorzugt für 60 bis 70 h bei einem $N_2$-Druck zwischen 500 und 1000 mbar oder für 1-20 h bei einem $N_2$-Druck zwischen 2 und 20 bar nitridiert.

In der Nitridierungsreaktion wird bei Einsatz von $AlB_{12}$ in der für den Schlickerguß verwendeten Ausgangsmischung nach folgender Reaktionsgleichung Bornitrid, Siliciumnitrid und Aluminiumnitrid erzeugt:

$$3Si + AlB_{12} + 8,5 N_2 \longrightarrow 12 BN + Si_3N_4 + AlN$$

Wenn in der für den Schlickerguß eingesetzten Ausgangsmischung $SiB_6$ als Borid verwendet wird, erfolgt die Bildung von Bornitrid und $Si_3N_4$ in der Nitridierungsreaktion nach folgender Reaktionsgleichung:

$$2 Si + SiB_6 + 5N_2 \longrightarrow 6BN + Si_3N_4$$

Analog lassen sich die Reaktionsgleichungen bei Verwendung anderer Boride aufstellen.

Nach dem Nitridierungsschritt wird durch eine Glühung in einem Temperaturbereich von 1500 bis 1900 °C die Mischkristallbildung erreicht. Die Bildung von $\beta'$ SiAlON Mischkristallen erfolgt nach folgender schematischer Reaktionsgleichung.

$$Si_3N_4 + AlN + Al_2O_3 ------> \beta' \; SiAlON$$

Die Oxinitridbildung erfolgt während des Glühens nach folgender Reaktionsgleichung.

$$Si_3N_4 + SiO_2 ------> 2 \; Si_2N_2O$$

Es ist aus den Reaktionsgleichungen ersichtlich, daß Aluminiumoxid für die $\beta'$ SiAlON Bildung in stöchiometrischer Menge, die sich nach dem Borid Gehalt richtet, zugegeben werden muß. Der Siliciumdioxid-Gehalt für die Oxinitridbildung richtet sich im wesentlichen nach dem Siliciumnitrid-Gehalt, der nach Schlickerguß und Nitridierung vorliegt. Aluminiumoxid und Siliciumdioxid müssen schon in dem Pulvergemisch, das für den Schlickerguß verwendet wird, vorhanden sein. Aluminiumoxid bzw. Siliciumdioxid nehmen an der Nitridierung nicht teil. Das im Nitridierungsschritt gebildete Bornitrid wird in der Glühbehandlung nicht umgesetzt.

Die nach vorstehenden Maßgaben herstellbaren Formkörper setzen sich bevorzugt aus 5 bis 60 Vol.-% Bornitrid und 40 bis 95 Vol.-% $\beta'$ SiAlON oder 40 bis 95 Vol.-% Siliciumoxinitrid sowie rohstoffbedingten Verunreinigungen zusammen.

Besonders bevorzugt ist ein Gehalt von 10 bis 50 Vol.-% Bornitrid und 50 bis 90 Vol.-% $\beta'$ SiAlON oder 50 bis 90 Vol.-% Siliciumoxinitrid.

Die Zugabe weiterer refraktärer Hartstoffe zu den Ausgangspulvern ist möglich, wenn diese refraktären Hartstoffe nicht bzw. nur zum Teil an den genannten Reaktionen teilnehmen. Somit ist der Einsatz beispielsweise folgender Hartstoffe in den angegebenen Mengen zusätzlich möglich:

| | |
|---|---|
| $Al_2O_3$ | 0 - 47,5 Vol.-% |
| Mullit | 0 - 47,5 Vol.-% |
| $ZrO_2$ | 0 - 47,5 Vol.-% |
| $Y_2O_3$ | 0 - 47,5 Vol.-% |
| YAG | 0 - 47,5 Vol.-% |
| CaO | bis 20 mol% von $ZrO_2$ |
| MgO | bis 20 mol% von $ZrO_2$ |

Die vorstehend angegeben Mengen sind Maßgaben, welche die freie Wahl der Einzelkomponenten einschränken. Alle Prozentangaben ergänzen sich bei jeder Zusammensetzung zu 100 Vol.-%.

Durch die Hartstoffe wird vor allem die Korrosionsfestigkeit der Formkörper gegen hochlegierte Stähle verbessert. CaO und MgO dienen der Stabilisierung des $ZrO_2$.

Durch das erfindungsgemäße Verfahren ist es bei Beachtung der genannten Auswahlkriterien möglich, Bornitrid-haltige Formkörper mit verschiedensten Eigenschaften unter Verwendung des Schlickergusses herzustellen sowie das energie- und apparataufwendige und damit teure Heißpressen oder heißisostatische Pressen zu vermeiden.

Wenn besonders dichte Formkörper erwünscht sind, ist ein heißisostatisches Nachverdichten möglich. Dies erfolgt unter Abschluß der Probenoberfläche mit Glas bei 1600 bis 1900°C und 2000 bar Ar Atmosphäre mit einer Haltezeit von 30 bis 120 min., bevorzugt 45 bis 60 min.

Aus den erfindungsgemäßen Werkstoffen lassen sich beispielsweise Ablöseringe, Thermoelementschutzrohre, Gießdüsen, Auskleidungen für die Glasindustrie, oder Brennhilfsmittel herstellen.

Die folgenden Beispiele dienen der weiteren Erläuterung der Erfindung.

Beispiel 1: Herstellung eines Formkörpers aus 20 Vol.-% Bornitrid und 80 Vol.-% $\beta'$SiAlON

469,2 g Si (Sicomill Grade 2 Kema Nord), 51,6 g $Al_2O_3$ (CT 8000, ALCOA) und 79,2 g $AlB_{12}$ (Grade A, H.C.Starck) werden mit 300 g Wasser gemischt. Dazu werden 3 g Verflüssiger (2,4 g Disperg 30 (Lehmann und Foss), 0,6 g Tensid Sequion NA40 (Polygon Chemie)) gegeben. Der pH-Wert der Dispersion wird mit Essigsäure auf pH 5,5 eingestellt. Ein Puffer (4,8 g Ameisensäureethylester (Riedel de Haen)), der verhindert, daß der pH-Wert über den Neutralpunkt hinausgeht, wird zugesetzt. Der Ansatz wird 15 h auf einem Rollenbock mit Gummikugeln durchmischt.

Dieser Schlicker wird auf einer Gipsplatte zu einem Ring mit 26 mm Dicke verschlickert. Die Standzeit beträgt 15 min. Das Grünteil wird bei 150°C getrocknet und anschließend in einer Temperaturrampe von 1200 bis 1400°C unter $N_2$ Atmosphäre (800 mbar) 70 h lang nitridiert. Anschließend wird der Formkörper bei 1900°C und 100 bar $N_2$ Druck 2h lang zur Mischkristallbildung geglüht. Der erhaltene Formkörper enthält 20 Vol.-% Bornitrid bezogen auf 100 % theoretische Dichte. Das $\beta'$ SiAlON hat einen X-Wert von 0,5. Die Dichte des Formkörpers entspricht 77 % der theoretischen Dichte, er hat ein E-Modul von 54,5 GPa und eine 4 Punkt Biegefestigkeit von 54,4 ± 2,4 MPa. Die Wärmeleitfähigkeit beträgt bei 50 °C 15,1 W/mK und bei 650°C 9,9 W/mK. Der Wärmeausdehnungskoeffizient bei 1000°C beträgt 3,18 x $10^{-6}$ $K^{-1}$. Der Formkörper läßt sich spanabhebend nachbearbeiten.

Beispiel 2: Herstellung eines Formkörpers aus 20 Vol.-% Bornitrid und 80 Vol.-% $\beta'$ SiAlON

Der Formkörper aus Beispiel 1 wird in Glas gehüllt und bei 1800°C und 2000 bar in Ar Atmosphäre für 45 min heißisostatisch nachverdichtet. Der erhaltene Formkörper enthält 20 Vol.-% Bornitrid bezogen auf 100 % theoretische Dichte. Das $\beta'$ SiAlON hat einen X-Wert von 0,5. Die Dichte des Formkörpers entspricht 97 % der theoretischen Dichte, er hat ein E-Modul von 156 GPa und eine 4 Punkt Biegefestigkeit von 195 ± 8,4 MPa. Der Wärmeausdehnungskoeffizient bei 1000°C beträgt 3,14 x $10^{-6}$ $K^{-1}$. Der Formkörper muß durch Naßbearbeitung in die Endform gebracht werden.

Beispiel 3: Herstellung eines Ablöseringes aus 50 Vol.-% Bornitrid und 50 Vol.-% $\beta'$ SiAlON

236,4 g Si (Sicomill Grade 2 Kema Nord), 143,4 g $Al_2O_3$ (CT 8000, ALCOA) und 220,2 g $AlB_{12}$ (Grade A, H.C.Starck) werden wie in Beispiel 1 beschrieben zu einem Formkörper verarbeitet, nitridiert und nachgeglüht. Der erhaltene Formkörper enthält 50 Vol.-% Bornitrid bezogen auf 100 % theoretische Dichte. Das $\beta'$ SiAlON hat einen X-Wert von 2,0. Die Dichte des Formkörpers entspricht 80 % der theoretischen Dichte, er hat ein E-Modul von 36,1 GPa und eine 4 Punkt Biegefestigkeit von 62,5 ± 4,4 MPa. Der Wärmeausdehnungskoeffizient bei 1000°C beträgt 3,15 x $10^{-6}$ $K^{-1}$. Der Formkörper läßt sich spanabhebend nachbearbeiten.

Beispiel 4: Herstellung eines Ablöseringes aus 50 Vol.-% Bornitrid und 50 Vol.-% $\beta'$ SiAlON

Der Formkörper aus Beispiel 3 wird in Glas gehüllt bei 1850°C und 2000 bar in Ar Atmosphäre für 45 min heißisostatisch nachverdichtet. Der erhaltene Formkörper enthält 50 Vol.-% Bornitrid bezogen auf 100 % theoretische Dichte. Das $\beta'$ SiAlON hat einen X-Wert von 2,0. Die Dichte des Formkörpers entspricht 96 % der theoretischen Dichte, er hat ein E-Modul von 62,5 GPa und eine 4 Punkt Biegefestigkeit von 132 ± 7,3 MPa. Der Wärmeausdehnungskoeffizient bei 1000°C beträgt 3,30 x $10^{-6}$ $K^{-1}$.

Beispiel 5: Herstellung eines Formkörpers aus 33 Vol.-% Bornitrid und 67 Vol.-% $\beta'$ SiAlON

372,0 g Si (Sicomill Grade 2 Kema Nord), 90,0 g $Al_2O_3$ (CT 8000, ALCOA) und 138,0 g $AlB_{12}$ (Grade A, H.C.Starck) werden wie in Beispiel 1 beschrieben zu einem Formkörper verarbeitet, nitridiert und nachgeglüht. Der erhaltene Formkörper enthält 33 Vol.-% Bornitrid bezogen auf 100 % theoretische Dichte. Das $\beta'$ SiAlON hat einen X-Wert von 1,0. Die Dichte des Formkörpers entspricht 77 % der theoretischen Dichte, er hat ein E-Modul von 30,0 GPa und eine 4 Punkt Biegefestigkeit von 47,4 ± 5,7 MPa. Die Wärmeleitfähigkeit beträgt bei 50 °C 16,7 W/mK und bei 650°C 12,8 W/mK. Der Wärmeausdehnungskoeffizient bei 1000°C beträgt 3,12 x $10^{-6}$ $K^{-1}$. Der Formkörper läßt sich spanabhebend nachbearbeiten.

Beispiel 6: Herstellung eines Formkörpers aus 33 Vol.-% Bornitrid und 67 Vol.-% $\beta'$ SiAlON

Der Formkörper aus Beispiel 5 wird in Glas gehüllt bei 1850°C und 2000 bar in Ar Atmosphäre für 45 min heißisostatisch nachverdichtet. Der erhaltene Formkörper enthält 33 Vol.-% Bornitrid bezogen auf 100 % theoretische Dichte. Das $\beta'$ SiAlON hat einen X-Wert von 1,0. Die Dichte des Formkörpers entspricht 97 % der theoretischen Dichte, er hat ein E-Modul von 104 GPa und eine 4 Punkt Biegefestigkeit von 176 ± 27,6 MPa.

Beispiel 7: Herstellung eines Formkörpers aus 10 Vol.-% Bornitrid und 90 Vol.-% $\beta'$ SiAlON

544,8 g Si (Sicomill Grade 2 Kema Nord), 18,0 g $Al_2O_3$ (CT 8000, ALCOA) und 37,2 g $AlB_{12}$ (Grade A, H.C.Starck) werden wie in Beispiel 1 beschrieben zu einem Formkörper verarbeitet, nitridiert und nachgeglüht. Der erhaltene Formkörper enthält 10 Vol.-% Bornitrid bezogen auf 100 % theoretische Dichte. Das $\beta'$ SiAlON hat einen X-Wert von 0,2. Die Dichte des Formkörpers entspricht 77 % der theoretischen Dichte, er hat ein E-Modul von 65,0 GPa und eine 4 Punkt Biegefestigkeit von 71,2 ± 2,8 MPa. Der Formkörper läßt sich spanabhebend nachbearbeiten.

Beispiel 8: Herstellung eines Formkörpers aus 10 Vol.-% Bornitrid und 90 Vol.-% $\beta'$ SiAlON

Der Formkörper aus Beispiel 7 wird in Glas gehüllt bei 1850°C und 2000 bar in Ar Atmosphäre für 60 min heißisostatisch nachverdichtet. Der erhaltene Formkörper enthält 10 Vol.-% Bornitrid bezogen auf 100 % theoretische Dichte. Das $\beta'$ SiAlON hat einen X-Wert von 0,2. Die Dichte des Formkörpers entspricht 85 % der theoretischen Dichte.

Beispiel 9: Herstellung eines Formkörpers aus 20 Vol.-% Bornitrid, 80 Vol.-% ($\beta'$ SiAlON + $ZrO_2$)

247,8 g Si (Sicomill Grade 2 Kema Nord), 27,0 g $Al_2O_3$ (CT 8000, ALCOA) 41,4 g $AlB_{12}$ (Grade A, H.C.Starck) sowie 240,0 g $ZrO_2$ (unstabilisiert CC10 Projektor) und 43,8 g $Y_2O_3$ (99,9 % Auer Remy) werden wie in Beispiel 1 beschrieben, zu einem Formkörper verarbeitet. Das Grünteil wird bei 10 bar $N_2$-Druck in 6 h bei 1200-1350°C nitridiert und anschließend bei 1800°C und 100 bar $N_2$-Druck geglüht. Der erhaltene Formkörper enthält 20 Vol.-% Bornitrid bezogen auf 100 % theoretische Dichte. Die Dichte des Formkörpers entspricht 85 % der theoretischen Dichte.

Beispiel 10: Herstellung eines Formkörpers aus 20 Vol.-% Bornitrid, 80 Vol.-% ($\beta'$ SiAlON + $ZrO_2$)

247,8 g Si (Sicomill Grade 2 Kema Nord), 27,0 g $Al_2O_3$ (CT 8000, ALCOA) 11,0 g $AlB_{12}$ (Grade A, H.C.Starck), 20,4 g $CaB_6$ (> 30 $\mu$m, ESK) sowie 239,4 g $ZrO_2$ (unstabilisiert CC10, Projektor) und 3,0 g $Fe_2O_3$ werden mit 270 g dest. Wasser gemischt und wie in Beispiel 9 beschrieben zu einem Formkörper verarbeitet. Der erhaltene Formkörper enthält 20 Vol.-% Bornitrid bezogen auf 100 % theoretische Dichte. Die Dichte des Formkörpers entspricht 81 % der theoretischen Dichte.

Beispiel 11: Herstellung eines Formkörpers aus 10 Vol.-% Bornitrid und 80 Vol.-% ($\beta'$ SiAlON + YAG)

469,8 g Si (Sicomill Grade 2 Kema Nord), 51,0 g $Al_2O_3$ (CT 8000, ALCOA), 32,4 g $AlB_{12}$ (Grade A, H.C.Starck) und 46,8 g $Y_2O_3$ (99,9 % Auer Remy) werden bis einschließlich das Nitridieren, wie in Beispiel 1 beschrieben, zu einem Formkörper verarbeitet. Das Nachglühen zur Mischkristallbildung erfolgt 2 h bei 1900°C. Beim Abkühlen wird eine Temperatur von 1600°C 4 h lang gehalten. Dann wird weiter abgekühlt. In den 4 h bei 1600°C bildet sich das YAG (3 $Y_2O_3$ x 5 $Al_2O_3$). Die Dichte des Formkörpers entspricht 95 % der theoretischen Dichte.

Beispiel 12: Herstellung eines Formkörpers aus 20 Vol.-% Bornitrid 80 Vol.-% ($\beta'$ SiAlON + YAG)

171,0 g Si (Sicomill Grade 2 Kema Nord), 277,2 g $Al_2O_3$ (CT 8000, ALCOA), 100,8 g $AlB_2$ (Grade A, H.C.Starck) und 93,0 g $Y_2O_3$ (99,9 %, Auer Remy) werden, wie in Beispiel 11 beschrieben, zu einem Formkörper verarbeitet. Wegen des höheren $Y_2O_3$-Gehalts hat der Formkörper mit 98 % der theoretischen Dichte eine höhere Dichte als der Formkörper aus Beispiel 11.

Die Einwaagen zur Herstellung der erfindungsgemäßen $\beta'$ SiAlON-haltigen Formkörper der Beispiele 13 bis 20 sowie die Zusammensetzung der Formkörper sind in Tab. 1 zusammengefaßt. Die Formkörper der Beispiele 13 bis 20 werden wie in Beispiel 1 beschrieben hergestellt.

Tab.1

| Bsp | Ausgangspulver (Gew%) | | | | Endprodukt (Vol% bez. auf 100 % TD) | | |
|---|---|---|---|---|---|---|---|
| | Si | $Al_2O_3$ | $AlB_{12}$ | $AlB_2$ | BN | SiAlON | x Wert SiAlON |
| 13 | 68,5 | 16,6 | 10,6 | 4,3 | 20 | 80 | 1,0 |
| 14 | 53,1 | 32,1 | 4,3 | 10,5 | 20 | 80 | 2,0 |
| 15 | 35,8 | 43,2 | - | 21,0 | 20 | 80 | 3,0 |
| 16 | 48,2 | 29,1 | 18,8 | 3,9 | 33 | 67 | 2,0 |
| 17 | 32,7 | 39,6 | 12,8 | 14,9 | 33 | 67 | 3,0 |
| 18 | 21,8 | 52,7 | - | 25,5 | 33 | 67 | 4,0 |
| 19 | 27,8 | 33,6 | 32,7 | 5,9 | 50 | 50 | 3,0 |
| 20 | 18,6 | 44,9 | 15,2 | 21,4 | 50 | 50 | 4,0 |

Beispiel 21 : Herstellung eines Formkörpers aus 20 Vol.-% Bornitrid und 80 Vol.-% $Si_2N_2O$

261,6 g Si (Sicomill Grade 2 Kema Nord), 13,8 g $AlB_{12}$ (Grade A, H.C.Starck), sowie 239,4 g $SiO_2$ (>20 $\mu$m, AKW ) und 82,2 g $SiB_6$ werden, wie in Beispiel 1 beschrieben, zu einem Ablösering verarbeitet. Der erhaltene Formkörper enthält 20 Vol.-% Bornitrid bezogen auf 100 % theoretische Dichte. Die Dichte des Formkörpers entspricht 81 % der theoretischen Dichte.

Die Einwaagen zur Herstellung der erfindungsgemäßen $Si_2N_2O$haltigen Formkörper der Beispiele 22 und 23 sowie die Zusammensetzung der Formkörper sind in Tab. 2 zusammengefaßt. Die Formkörper der Beispiele 22 und 23 werden, wie in Beispiel 1 beschrieben, hergestellt.

Tab. 2

| Bsp | Ausgangspulver (Gew%) | | | | Endprodukt (Vol% bez. auf 100 % TD) | |
|---|---|---|---|---|---|---|
| | Si | $AlB_{12}$ | $SiO_2$ | $SiB_6$ | BN | $Si_2ON_2$ |
| 22 | 26,9 | - | 28,7 | 44,4 | 50 | 50 |
| 23 | 38,0 | 4,3 | 32,5 | 25,2 | 33 | 67 |

## Patentansprüche

1.  Keramischer Verbundwerkstoff bestehend aus 5 bis 60 Vol.-% Bornitrid und 40 bis 95 Vol.- % $\beta'$ SiAlON oder 40 bis 95 Vol.- % Siliciumoxinitrid.

2.  Keramischer Verbundwerkstoff nach Anspruch 1, dadurch gekennzeichnet, daß er zusätzlich bis zu 50 Vol % des $\beta'$ SiAlON oder Siliciumoxinitrid-Anteils einen weiteren refraktären Hartstoff enthält.

3.  Keramischer Werkstoff nach Anspruch 2, dadurch gekennzeichnet, daß als weitere refraktäre Hartstoffe eine oder mehrere Substanzen ausgewählt aus der Gruppe $Al_2O_3$, Mullit, Zirkonoxid, YAG ($3Y_2O_3$ x $5Al_2O_3$) oder Yttriumoxid verwendet werden.

4.  Verfahren zur Herstellung eines Formkörpers aus einem keramischen Verbundwerkstoff enthaltend Bornitrid dadurch gekennzeichnet, daß

    über Schlickerguß ein Gemisch ausgewählter Ausgangspulver, welche für den Schlickerguß geeignet sind, in eine endkonturnahe Form gebracht werden,

    diese endkonturnahe Form zur Bildung von Bornitrid und Siliciumnitrid aus der Ausgangspulvermischung einer Nitridierung unterzogen wird und

    anschließend eine Glühbehandlung zur Bildung der Mischkristalle durchgeführt wird.

5. Verfahren nach Anspruch 4, dadurch gekennzeichnet, daß als Ausgangspulver Silicium, und eine oder mehrere Substanzen ausgewählt aus der Gruppe $SiB_4$, $SiB_6$, $AlB_2$, $AlB_{12}$, $CaB_6$ und/oder Siliciumoxid bzw. Aluminiumoxid verwendet werden.

6. Verfahren nach Anspruch 4 oder 5, dadurch gekennzeichnet, daß die Nitridierung bei 1000 bis 1410°C und bei 500 mbar bis 30 bar $N_2$-Druck in bis zu 120 Stunden erfolgt.

7. Verfahren nach Anspruch 4 bis 6, dadurch gekennzeichnet, daß die Glühbehandlung bei 1500 bis 1900°C und maximal 100 bar $N_2$-Druck erfolgt.

8. Verfahren nach einem der Ansprüche 4 bis 7, dadurch gekennzeichnet, daß der Formkörper durch heißisostatisches Pressen nachverdichtet wird.

9. Verfahren zur Herstellung Bornitrid-haltiger Formkörper, dadurch gekennzeichnet, daß das Bornitrid während des Herstellungsverfahrens gebildet wird.

10. Verfahren zur Herstellung Bornitrid-haltiger Formkörper, dadurch gekennzeichnet, daß das Bornitrid während des Herstellungsverfahrens durch Reaktionssintern gebildet wird.